# EUROPEAN PATENT APPLICATION

(11) **EP 1 498 716 A1**
(43) Date of publication of application: **19.01.2005**
(21) Application number: 04425497.7
(22) Date of filing: 07.07.2004
(51) Int. Cl.: G01L 17/00, B60C 25/05

(54) **System for checking the inflation of tyres**

(30) Priority: 16.07.2003 IT RM20030348
(71) Applicant: Icaplants S.r.l., 04010 Borgo S. Michel (LT) (IT)
(72) Inventor: Lucietto, Enzo, Icaplants S.r.l., 04010 Borgo S. Michele (LT) (IT); Vian, Stefano, Icaplants S.r.l., 04010 Borgo S. Michele (LT) (IT); Ricci, Giovanni, Icaplants S.r.l., 04010 Borgo S. Michele (LT) (IT); Pompili, Emilio, Icaplants S.r.l., 04010 Borgo S. Michele (LT) (IT)
(74) Representative: Iannone, Carlo Luigi

(57) **Abstract**

This invention concerns a system for checking the inflation of tyres, characterised in that it comprises feed means of the tyres, and at least an inflating checking station, which provides at least a stopping arm to stop the tyre in a check position, sensing means of the tyre arrive for the stop of tyre feed, and at least a feeler pin, which operates on the tyre to sense the inflating and to send to a check device the data of a right inflating.

## Description

This invention concerns a system for checking the inflation of tyres.

More in detail, this invention concerns a system as above which allows the automatic measure of pressure of the tyres before their assembling in a vehicle during the production process.

As anyone, who works in this specific field, knows, the problem of the check of the inflation of tyres before their assembling on vehicles during the during the production process is an existing problem and it is solved by means of complex solutions absolutely not satisfactory, because they are complex, laborious, expensive, or not satisfactory from the quality check point of view.

Among the solutions used at present to check the inflating of the tyres before the assembling in a vehicle along the assembling chain, it can be mentioned the measure of the pressure on the valve of the tyre, or the manual measure of said pressure.

Another method used provides the measure of the inflating of all the tyres manually, with a great loss of time and human resources.

A less precise system provides a measure of a sample of some tyres, this system even if reduces considerably the costs, does not guarantees that vehicles with flat tyres are not introduced in the market, with the consequent dangerous situations.

Still another approach followed at present provides a statistic measure of the pressure.

It is evident that none of the preceding solutions can be considered satisfactory by the manufacturing industries of vehicles, thus it is evident the necessity to have a solution according to the present invention, which allows solving all the problems mentioned above.

Those and other results are obtained according the present invention by means of a system which provides a the measure of the inflating by means of at least a feeler pin which detects the compression resistance of the bead of the tyre and put it as a proportional function of the internal pressure of the tyre.

It is specific subject matter of this invention a system for checking the inflation of tyres, characterised in that it comprises feed means of the tyres, and at least an inflating checking station, which provides at least a stopping arm to stop the tyre in a check position, sensing means of the tyre arrive for the stop of tyre feed, and at least a feeler pin, which operates on the tyre to sense the inflating and to send to a check device the data of a right inflating.

Preferably, according to the invention, a couple of stopping arms are provided.

Further according to the invention, two opposed feeler pins are provided.

More in detail, said feeler pins could be moved by pneumatic cylinders.

Still according to the invention, said at least a feeler pin provides a linear potentiometer.

More in detail, the system according to the invention provides the deformation of the tyre by means of said at least a feeler pin, and the correlation between the stroke of the feeler pin and the inflating pressure of the tyre.

This invention will be now described, by way of explanation and not by way of limitation, according to its preferred embodiments, by particularly referring to the attached drawings, in which:
figure 1 is a first top lateral view of a first embodiment of a system according to the invention;
figure 2 is a first top view of the system of figure 1;
figure 3 is a second lateral view of the system of figure 1;
figure 4 is a first top view of the system of figure 1;
figure 5 is a first lateral view of a second embodiment of a system according to the invention;
figure 6 is a first top view of the system of figure 5;
figure 7 is a second lateral view of the system of figure 5;
figure 8 is a first top view of the system of figure 5; and
figure 9 shows a correlation graph between the detected value and the pressure of the tyre.

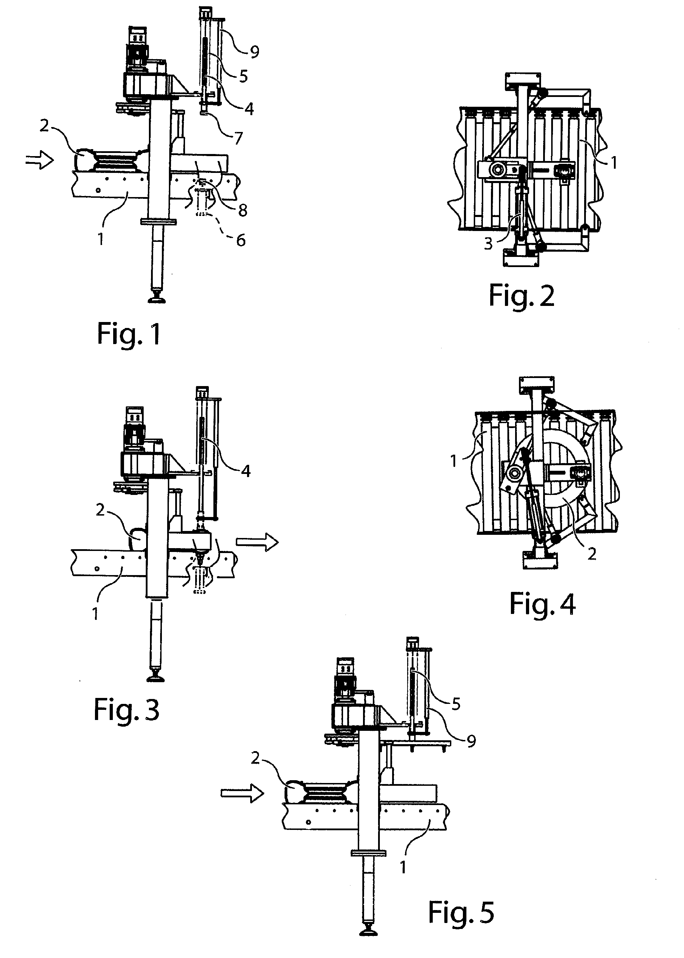

Examining initially the figures 1 to 4 of the attached drawings, a first embodiment of the system for checking the inflation of tyres according to the invention is shown, which provides a feed device 1 for the tyres 2.

Along said device 1, a checking station is placed for the check of the inflating, which is based on a contact system which checks, by means of a linear potentiometer 3 (see figure 2), that the tyre 2 is really inflated and gives information about the right inflation, relating the data received, with the data previously set, with a reliable precision respect to the minimum spread threshold set.

As above mentioned, a roller feed system 1 brings the tyre close to the station, where two arms 4 (only one of which is shown in the figures), driven by an engine (not shown) and set in motion by respective double effect cylinders 5, 6, shut up to stop it in correspondence of two feeler pins 7, 8.

A photocell (not shown) senses a tyre 2 arriving and stops momentarily the input feed device 1 for the time necessary to check the pressure.

Said two contrasting pneumatic cylinders 5, 6, make a perpendicular action on the bead of the tyre 2, with a pressure, which can be regulated at the start of the cycle.

The system according to the invention is based on the check of the deformation tyre 2 subject o the compression by the feeler pins 7, 8. The more the tyre 2 is inflated, the greater is the resistance founded by feeler pins 7, 8 for feeding.

In this way, a function between the real stroke of the feeler pin 7, on which is placed a linear potentiometer 9, and the inflating pressure.

In the figures 5 to 8 a second embodiment of the system, according to the present invention, is shown, which is substantially identical to the embodiment described in the figures 1 - 4, thus the same numerical references will be used to point out the corresponding parts.

The substantial difference between the two embodiments is that the one shown in figures 5 - 8 provides only an arm 4, and only a feeler pin 7.

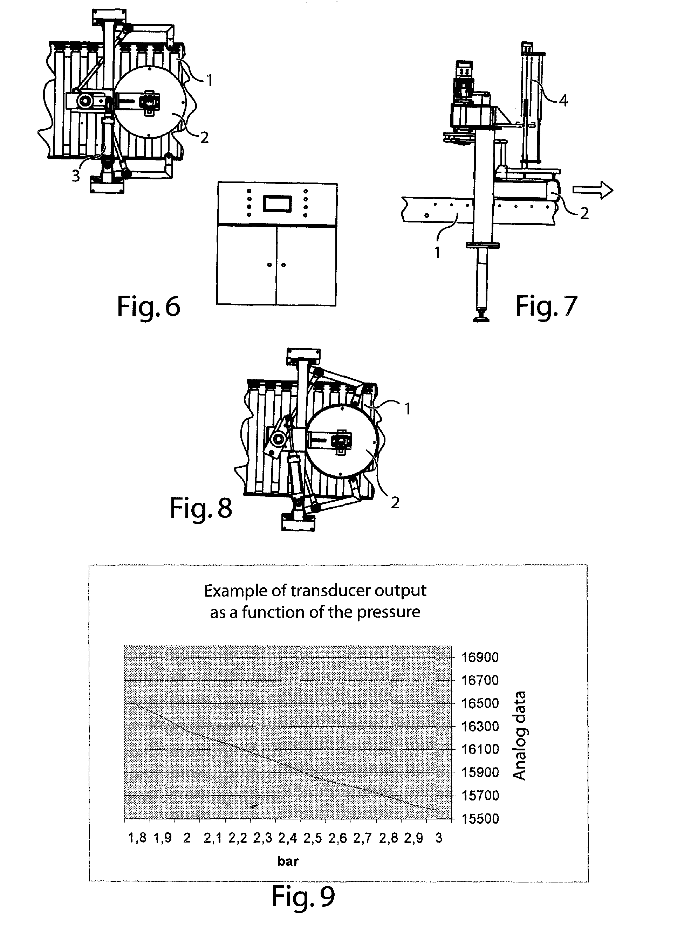

As can be checked in figure 9, corresponding to a greater pressure of the tyre, it will be obtained a smaller value of the analogical data (real stroke of the potentiometer).

This invention have been above described by way of illustration, but not by way of limitation according to its preferred embodiments and it should be understood that those skilled in the art can make other modifications and changes without departing from the scope of the invention as defined in the following claims.

## Claims

1. A system for checking the inflation of tyres, **characterised in that** it comprises feed means of the tyres, and at least an inflating checking station, which provides at least a stopping arm to stop the tyre in a check position, sensing means of the tyre arrive for the stop of tyre feed, and at least a feeler pin, which operates on the tyre to sense the inflating and to send to a check device the data of a right inflating.

2. A system for checking the inflation of tyres according to claim 1, **characterised in that** it provides a couple of stopping arms.

3. A system for checking the inflation of tyres according to anyone of the preceding claims, **characterised in that** it provides two opposed feeler pins.

4. A system for checking the inflation of tyres according to anyone of the preceding claims, **characterised in that** said feeler pins are moved by pneumatic cylinders.

5. A system for checking the inflation of tyres according to anyone of the preceding claims, **characterised in that** said at least a feeler pin provides a linear potentiometer.

6. A system for checking the inflation of tyres according to anyone of the preceding claims, **characterised in that** it provides the deformation of the tyre by means of said at least a feeler pin, and the correlation between the stroke of the feeler pin and the inflating pressure of the tyre.

7. A system for checking the inflation of tyres according to all the preceding claims, substantially as illustrated and described.
